(19) Europäisches Patentamt
European Patent Office
Office européen des brevets

(11) EP 3 030 594 B1

(12) **EUROPÄISCHE PATENTSCHRIFT**

(45) Veröffentlichungstag und Bekanntmachung des Hinweises auf die Patenterteilung:
**11.10.2017 Patentblatt 2017/41**

(21) Anmeldenummer: **14749834.9**

(22) Anmeldetag: **08.08.2014**

(51) Int Cl.:
***C08F 212/14*** *(2006.01)* ***C08F 8/30*** *(2006.01)*
***B01J 41/12*** *(2017.01)* ***B01J 45/00*** *(2006.01)*

(86) Internationale Anmeldenummer:
**PCT/EP2014/067109**

(87) Internationale Veröffentlichungsnummer:
**WO 2015/018931 (12.02.2015 Gazette 2015/06)**

(54) **VERFAHREN ZUR HERSTELLUNG VON MONODISPERSEN, AMIDOMETHYLIERTEN VINYLAROMATISCHEN PERLPOLYMERISATEN**

METHOD FOR PRODUCING MONODISPERSE, AMIDOMETHYLATED VINYL AROMATIC BEAD POLYMERS

PROCÉDÉ DE FABRICATION DE POLYMÈRES EN PERLES VINYLAROMATIQUES AMIDOMÉTHYLÉS MONODISPERSES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.08.2013 EP 13179835**

(43) Veröffentlichungstag der Anmeldung:
**15.06.2016 Patentblatt 2016/24**

(73) Patentinhaber: **LANXESS Deutschland GmbH
50569 Köln (DE)**

(72) Erfinder:
- **KLIPPER, Reinhold
50933 Köln (DE)**
- **ZARGES, Wolfgang
51069 Köln (DE)**
- **HALLE, Olaf
51061 Köln (DE)**
- **SCHELHAAS, Michael
50733 Köln (DE)**

(56) Entgegenhaltungen:
**US-A- 4 232 125 US-A1- 2008 229 882**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 030 594 B1

Printed by Jouve, 75001 PARIS (FR)

## Beschreibung

Die Erfindung betrifft ein Verfahren zur Herstellung von monodispersen, amidomethylierten, vinylaromatischen Perlpolymerisaten

Monodisperse, amidomethylierte, vinylaromatische Perlpolymerisate stellen wichtige Zwischenprodukte bei der Synthese von Ionenaustauschern und Chelatharzen dar. Verfahren zur Herstellung monodisperser, phthalimidomethylierter, vinylaromatischer Perlpolymerisate sind aus der US 6649663 B1 und der US 7053129 B1 bekannt. In beiden Verfahren werden zunächst in einem Schritt N-Methylolphthalimid erzeugt, welches in einem weiteren Schritt säurekatalytisch zu Bis(phthalimidomethyl)ether umgesetzt wird. Aus dem Bis(phthalimidomethyl)ether wird dann in einem dritten Schritt dass $SO_3$ Addukt des Bis(phthalimidomethyl)ether hergestellt, welches mit den monodispersen Perlpolymerisaten zum monodispersen, phthalimidomethylierten, vinylaromatischen Perlpolymerisat umgesetzt wird. Der Nachteil an beiden Verfahren ist, das sie eine Vielzahl von Reaktionsstufen umfassen, apparativ aufwendig sind und eine zeitintensive Verfahrensbetreuung benötigen, so dass sie aus ökologischer und ökonomischer Sicht nicht effizient sind. Weitere Verfahren zur Herstellung von amidomethylierten, vinylaromatischen Perlpolymerisaten, die zu nicht zufriedenstellende Substitutionsgraden führten, sind aus der WO2008/229882 und der US 4,232,125 bekannt.

Es bestand daher weiterhin das Bedürfnis nach einem Verfahren, dass die Nachteile des Standes der Technik überwindet und mit dem monodisperse, amidomethylierte, vinylaromatische Perlpolymerisate effizient hergestellt werden können.

Es wurde nun überraschend gefunden, dass die Umsetzung monodisperser, vinylaromatischer Perlpolymerisate mit kondensierten Formaldehyden und Protonensäuren unter geeigneten Reaktionsbedingungen zu monodispersen, amidomethylierten, vinylaromatischen Perlpolymerisaten unter hohen Ausbeuten abläuft.

Gegenstand der vorliegenden Erfindung ist daher ein Verfahren zur Herstellung monodisperser, amidomethyüerter, vinylaromatischer Perlpolymerisate bei dem mindestens ein monodisperses, vinylaromatisches Perlpolymerisat mit mindestens einer Verbindung der Formel (I) oder deren Salze

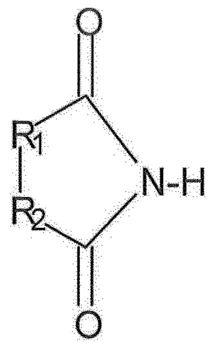

(I)

wobei $R_1$ = -CH-($C_1$-$C_6$-Alkyl) oder -$CH_2$- und $R_2$ = -CH-($C_1$-$C_6$-Alkyl) oder -$CH_2$- oder $R_1$ und $R_2$ bilden zusammen einen gegebenenfalls durch $C_1$-$C_6$-Alkyl substituierten $C_6$-$C_{14}$-Aryl oder $R_1$ und $R_2$ stehen jeweils für -CH= ,
und mindestens ein kondensiertes Formaldehyd in Gegenwart mindestens einer Protonensäure und in Gegenwart mindestens eines organischen Lösungsmittels, bei einer Temperatur zwischen 55 °C und 75°C in einem Eintopfverfahren, umgesetzt wird.

$R_1$ und $R_2$ stellen bevorzugt gemeinsam einen durch $C_1$-$C_4$-Alkyl, substituierten $C_6$-$C_{16}$-Aryl dar. Besonders bevorzugt stellen $R_1$ und $R_2$ gemeinsam Phenyl dar, welches die gegebenenfalls durch $C_1$-$C_4$-Alkyl substituiert ist. Ganz besonders bevorzugt stellen Verbindungen der Formel (I) Phthalimid, Succinimid oder Maleinimid dar. Noch weiter bevorzugt ist die Verbindung der Formel (I) Phthalimid. Bei Verwendung von Phthalimid werden erfindungsgemäß phthalamidomethylierte Perlpolymerisate hergestellt. Als Salze der Verbindungen der Formel (I) werden im Allgemeinen Säureadditionsprodukte anorganischer oder organischer Säuren mit Verbindungen der Formel (I), wie z.B. Chlorid, Sulfat, Sulfit, Phosphat, Phosphit, Acetat, Oxalat, Tartrat, Formiat oder Citrat verstanden. Falls Salze eingesetzt werden, werden bevorzugt die Chloride oder Sulfate der Verbindungen der Formel (I) eingesetzt.

$C_1$-$C_6$-Alkyl bzw. $C_1$-$C_4$-Alkyl stehen im Rahmen der Erfindung für einen geradkettigen, zyklischen, verzweigten oder unverzweigten Alkylrest mit 1 bis 6 bzw. mit 1 bis 4 Kohlenstoffatomen. Beispielhaft und vorzugsweise steht $C_1$-$C_6$-Alkyl für Methyl, Ethyl, n-Propyl, Isopropyl, n-, i-, s- oder t-Butyl, Cyclopropyl, n-Propyl, 1-Methylbutyl.

Beispielhaft und vorzugsweise steht $C_1$-$C_4$-Alkyl für Methyl, Ethyl, n-Propyl und Isopropyl.

$C_6$-$C_{14}$-Aryl steht im Rahmen der Erfindung für ein mono-, bi- oder trizyklischen carbozyklischen, aromatischen Rest mit 6 bis 14 aromatischen Kohlenstoffatomen. Beispielhaft und vorzugsweise steht $C_6$-$C_{14}$-Aryl für Biphenyl, Phenyl, Naphthyl oder Fluorenyl, Phenathrenyl, Anthracenyl.

Besonders bevorzugt stellt $C_6$-$C_{14}$-Aryl Phenyl dar.

Unter kondensiertem Formaldehyd werden Kondensate des Formaldehyds verstanden. Die Herstellung solcher Verbindungen erfolgt nach üblichen dem Fachmann bekannten Verfahren. Als kondensierte Formaldehyde werden beispielweise Verbindungen der Formel (II) eingesetzt

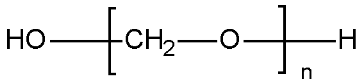

(II)

wobei n = 8 bis 100 ist. Bevorzugt werden Verbindungen der Formel (II) eingesetzt bei denen n = 8 bis 15 ist.

Es können aber auch zyklische Kondensate wie z.B. Trioxan eingesetzt werden. Besonders bevorzugt werden als kondensiertes Formaldehyd Paraformaldehyd oder Trioxan oder Gemische dieser Verbindungen eingesetzt. Ganz besonders bevorzugt wird als kondensiertes Formaldehyd Paraformaldehyd eingesetzt.

Die organischen Lösungsmittel stellen insbesondere Quellmittel für die Perlpolymerisate dar, dienen aber ebenfalls als Lösungsmittel für die weiteren Edukte der Amidierungsreaktion. Als organische Lösungsmittel im Sinne der Erfindung werden inerte Lösungsmittel eingesetzt, die in der Lage sind die Perlpolymerisate zu quellen und gleichzeitig als Lösungsmittel der weiteren Edukte eingesetzt werden können. Als organische Lösungsmittel können beispielsweise eingesetzt werden: chlorierte Kohlenwasserstoffe, wie z.B. Dichlorethan, Dichlorpropan, Methylenchlorid, Tetrachlorkohlenstoff, Trichlorethan, Chlorbenzol, Dichlorbenzol, wie z.B. Nitro- substituierte Kohlenwasserstoffe, wie z.B. Nitropropan, Nitrobenzol, wie z.B. cyclische Kohlenwasserstoffe, wie z.B. Cyclohexan und Methylcyclohexan. Bevorzugt werden als organische Lösungsmittel chlorierte, aliphatische Kohlenwasserstoffe, insbesondere chlorierte $C_1$-$C_6$-Alkane, Nitro- substituierte Kohlenwasserstoffe und zyklische aliphatische Kohlenwasserstoffe eingesetzt. Besonders bevorzugt werden als organische Lösungsmittel Dichlorethan, Dichlorpropan, Methylenchlorid, Tetrachlorkohlenstoff, Trichlorethan, Chlorbenzol, Dichlorbenzol, Nitropropan, Nitrobenzol, Cyclohexan, Methansulfonsäure und Methylcyclohexan eingesetzt. Ganz besonders bevorzugt wird als organisches Lösungsmittel 1,2-Dichlorethan eingesetzt.

Als Protonensäuren können beispielsweise anorganische oder organische Protonensäuren eingesetzt werden. Als anorganische Protonensäuren werden beispielsweise Salzsäure, Schwefelsäure, Oleum, Salpetersäure, salpetrige Säure, schwefelige Säure oder Phosphorsäure eingesetzt. Als organische Protonensäuren können z.B. Oxalsäure, Essigsäure oder Ameisensäure eingesetzt werden. Bevorzugt werden anorganische Protonensäuren eingesetzt. Besonders bevorzugt werden als Protonensäuren Schwefelsäure, Salzsäure oder Oleum eingesetzt.

Das monodisperse Perlpolymerisat kann nach den aus der Literatur bekannten Verfahren hergestellt werden. Beispielsweise werden solche Verfahren in US A 4 444 961, EP A 0 046 535, US A 4 419 245 oder WO 93/12167 beschrieben.

Als Perlpolymerisate werden erfindungsgemäß kugelförmige, vernetzte Polymerisate verstanden. Der Begriff vinylaromatisch im Sinne der Erfindung umfasst polyvinylaromatische und monovinylaromatische Monomere.

Zur Herstellung der monodispersen, vinylaromatischen Perlpolymerisate wird beispielsweise mindestens eine monovinylaromatische Verbindung und mindestens eine polyvinylaromatische Verbindung eingesetzt. Es ist jedoch auch möglich, Mischungen zweier oder mehrerer monovinylaromatischer Verbindungen und Mischungen zweier oder mehrerer polyvinylaromatischer Verbindungen einzusetzen. Bevorzugt werden zur Herstellung der monodispersen, vinylaromatischen Perlpolymerisate mindestens eine monovinylaromatische Verbindung und mindestens eine polyvinylaromatische Verbindung eingesetzt.

Als monovinylaromatische Verbindungen im Sinne der vorliegenden Erfindung werden bevorzugt monoethylenisch ungesättigte Verbindungen, wie beispielsweise Styrol, Vinyltoluol, Ethylstyrol, $\alpha$-Methylstyrol, Chlorstyrol, Chlormethylstyrol, Acrylsäurealkylester und Methacrylsäurealkylester eingesetzt.

Besonders bevorzugt wird Styrol oder Mischungen aus Styrol mit den vorgenannten Monomeren eingesetzt.

Bevorzugte polyvinylaromatische Verbindungen im Sinne der vorliegenden Erfindung sind multifunktionelle ethylenisch ungesättigte Verbindungen, wie beispielsweise Divinylbenzol, Divinyltoluol, Trivinylbenzol, Divinylnaphtalin, Trivinylnaphtalin, 1,7-Octadien, 1,5-Hexadien, Ethylenglycoldimethacrylat, Trimethylolpropantrimethacrylat oder Allylmethacrylat.

Die polyvinylaromatischen Verbindungen werden im Allgemeinen in Mengen von 1-20 Gew.-%, vorzugsweise 2-12 Gew.-%, besonders bevorzugt 4-10 Gew.-%, bezogen auf das Monomer oder dessen Mischung mit weiteren Monomeren eingesetzt. Die Art der polyvinylaromatischen Verbindungen (Vernetzer) wird im Hinblick auf die spätere Verwendung des Perlpolymerisates ausgewählt. Divinylbenzol ist in vielen Fällen geeignet. Für die meisten Anwendungen sind kommerzielle Divinylbenzolqualitäten, die neben den Isomeren des Divinylbenzols auch Ethylvinylbenzol enthalten, ausreichend.

In einer bevorzugten Ausführungsform der vorliegenden Erfindung kommen mikroverkapselte Monomertröpfchen zum Einsatz.

Für die Mikroverkapselung der Monomertröpfchen kommen die für den Einsatz als Komplexkoazervate bekannten Materialien in Frage, insbesondere Polyester, natürliche und synthetische Polyamide, Polyurethane, Polyharnstoffe.

Als natürliches Polyamid ist beispielsweise Gelatine besonders gut geeignet. Diese kommt insbesondere als Koazervat und Komplexkoazervat zur Anwendung. Unter gelatinehaltigen Komplexkoazervaten im Sinne der Erfindung werden vor allem Kombinationen von Gelatine mit synthetischen Polyelektrolyten verstanden. Geeignete synthetische Polyelektrolyte sind Copolymerisate mit eingebauten Einheiten von beispielsweise Maleinsäure, Acrylsäure, Methacrylsäure, Acrylamid und Methacrylamid. Besonders bevorzugt werden Acrylsäure und Acrylamid eingesetzt. Gelatinehaltige Kapseln können mit üblichen Härtungsmitteln wie beispielsweise Formaldehyd oder Glutardialdehyd gehärtet werden. Die Verkapselung von Monomertröpfchen mit Gelatine, gelatinehaltigen Koazervaten und gelatinehaltigen Komplexkoazervaten wird in der EP A 0 046 535 eingehend beschrieben. Die Methoden der Verkapselung mit synthetischen Polymeren sind bekannt. Gut geeignet ist beispielsweise die Phasengrenzflächenkondensation, bei der eine im Monomertröpfchen gelöste Reaktivkomponente, beispielsweise ein Isocyanat oder ein Säurechlorid, mit einer zweiten, in der wässrigen Phase gelösten Reaktivkomponente, beispielsweise einem Amin, zur Reaktion gebracht wird.

Die gegebenenfalls mikroverkapselten Monomertröpfchen enthalten gegebenenfalls einen Initiator oder Mischungen von Initiatoren zur Auslösung der Polymerisation. Für das erfindungsgemäße Verfahren geeignete Initiatoren sind beispielsweise Peroxyverbindungen wie Dibenzoylperoxid, Dilauroylperoxid, Bis (p-chlorbenzoyl)peroxid, Dicyclohexylperoxydicarbonat, tert.-Butylperoctoat, tert.-Butylperoxy-2-ethyl-hexanoat, 2,5-Bis(2-ethylhexanoylperoxy)-2,5-dimethylhexan oder tert.-Amylperoxy-2-ethylhexan, sowie Azoverbindungen wie 2,2'-Azo-bis(isobutyronitril) oder 2,2'-Azobis(2-methylisobutyronitril).

Die Initiatoren werden im Allgemeinen in Mengen von 0,05 bis 2,5 Gew.-%, vorzugsweise 0,1 bis 1,5 Gew.-%, bezogen auf die Monomeren-Mischung, angewendet.

Als weitere Zusätze in den gegebenenfalls mikroverkapselten Monomertröpfchen können gegebenenfalls Porogene verwendet werden, um im Perlpolymerisat eine makroporöse Struktur zu erzeugen. Hierfür sind organische Lösungsmittel geeignet, die das entstandene Polymerisat schlecht lösen bzw. quellen - (Fällmittel für Polymere). Beispielhaft seien Hexan, Octan, Isooctan, Isododecan, Methylethylketon, Butanol oder Octanol und deren Isomeren genannt.

Die Begriffe mikroporös oder gelförmig bzw. makroporös sind in der Fachliteratur bereits eingehend beschrieben worden.

Bevorzugte Perlpolymerisate im Sinne der vorliegenden Erfindung weisen eine makroporöse Struktur auf.

Das gegebenenfalls mikroverkapselte Monomertröpfchen kann gegebenenfalls auch bis zu 30 Gew.-% (bezogen auf das Monomer) vernetztes oder unvernetztes Polymer enthalten. Bevorzugte Polymere leiten sich aus den vorgenannten Monomeren, besonders bevorzugt von Styrol, ab.

Monodispers im Sinne der Erfindung bedeutet, dass mindestens 90 Volumen- oder Massen-% der Teilchen einen Durchmesser besitzen, der in dem Intervall mit der Breite von ± 10 % des häufigsten Durchmessers um den häufigsten Durchmesser herum liegt.

Zum Beispiel bei Harzkügelchen mit häufigstem Durchmesser von 0,5 mm liegen mindestens 90-Volumen- oder Massen-% in einem Größenintervall zwischen 0,45 mm und 0,55 mm, bei einem Harzkügelchen mit häufigstem Durchmesser von 0,7 mm liegen mindestens 90 Volumen- oder Massen-% in einem Größenintervall zwischen 0,77 mm und 0,63 mm.

Bei der Herstellung der monodispersen, vinylaromatischen Perlpolymerisate kann die wässrige Phase gegebenenfalls einen gelösten Polymerisationsinhibitor enthalten. Bevorzugt enthält die wässrige Phase einen gelösten Polymerisationsinhibitor. Als Inhibitoren im Sinne der vorliegenden Erfindung kommen sowohl anorganische als auch organische Stoffe in Frage. Beispiele für anorganische Inhibitoren sind Stickstoffverbindungen wie Hydroxylamin, Hydrazin, Natriumnitrit und Kaliumnitrit, Salze der phosphorigen Säure wie Natriumhydrogenphosphit sowie schwefelhaltige Verbindungen wie Natriumdithionit, Natriumthiosulfat, Natriumsulfit, Natriumbisulfit, Natriumrhodanid und Ammoniumrhodanid. Beispiele für organische Inhibitoren sind phenolische Verbindungen wie Hydrochinon, Hydrochinonmonomethylether, Resorcin, Brenzkatechin, tert.-Butylbrenzkatechin, Pyrogallol und Kondensationsprodukte aus Phenolen mit Aldehyden. Weitere geeignete organische Inhibitoren sind stickstoffhaltige Verbindungen. Hierzu gehören Hydroxylaminderivate wie beispielsweise N,N-Diethylhydroxylamin, N-Isopropylhydroxylamin sowie sulfonierte oder carboxylierte N-Alkylhydroxylamin- oder N,N-Dialkylhydroxylaminderivate, Hydrazinderivate wie beispielsweise N,N-Hydrazinodiessigsäure, Nitrosoverbindungen wie beispielsweise N-Nitrosophenylhydroxylamin, N-Nitro-sophenylhydroxylamin-Ammoniumsalz oder N-Nitrosophenylhydroxylamin-Aluminiumsalz. Die Konzentration des Inhibitors beträgt 5 - 1000 ppm bezogen auf die wässrige Phase, vorzugsweise 10 - 500 ppm, besonders bevorzugt 10 - 250 ppm.

Die Polymerisation der gegebenenfalls mikroverkapselten Monomertröpfchen zum monodispersen, vinylaromatischen Perlpolymerisat erfolgt, wie bereits oben erwähnt, gegebenenfalls in Anwesenheit eines oder mehrerer Schutzkolloide in der wässrigen Phase. Als Schutzkolloide eignen sich natürliche oder synthetische wasserlösliche Polymere, wie beispielsweise Gelatine, Stärke, Polyvinylalkohol, Polyvinylpyrrolidon, Polyacrylsäure, Polymethacrylsäure oder Copolymerisate aus (Meth)acrylsäure und (Meth)acrylsäureestern. Sehr gut geeignet sind auch Cellulosederivate, insbesondere Celluloseester und Celluloseether, wie Carboxymethylcellulose, Methylhydroxyethylcellulose, Methylhydroxypropylcellulose und Hydroxyethylcellulose. Besonders gut geeignet ist Gelatine. Die Einsatzmenge der Schutzkolloide beträgt im Allgemeinen 0,05 bis 1 Gew.-% bezogen auf die wässrige Phase, vorzugsweise 0,05 bis 0,5 Gew. %.

Die Polymerisation zum monodispersen, vinylaromatischen Perlpolymerisat kann gegebenenfalls auch in Anwesenheit eines Puffersystems durchgeführt werden. Bevorzugt werden Puffersysteme, die den pH-Wert der wässrigen Phase bei Beginn der Polymerisation auf einen Wert zwischen 14 und 6, vorzugsweise zwischen 12 und 8, einstellen. Unter diesen Bedingungen liegen Schutzkolloide mit Carbonsäuregruppen ganz oder teilweise als Salze vor. Auf diese Weise wird die Wirkung der Schutzkolloide günstig beeinflusst. Besonders gut geeignete Puffersysteme enthalten Phosphat- oder Boratsalze. Die Begriffe Phosphat und Borat im Sinne der Erfindung umfassen auch die Kondensationsprodukte der ortho-Formen entsprechender Säuren und Salze. Die Konzentration des Phosphats bzw. Borats in der wässrigen Phase beträgt 0,5 - 500 mmol/l, vorzugsweise 2,5 - 100 mmol/l.

Die Rührgeschwindigkeit bei der Polymerisation ist weniger kritisch und hat im Gegensatz zur herkömmlichen Perlpolymerisation keinen Einfluss auf die Teilchengröße. Es werden niedrige Rührgeschwindigkeiten angewandt, die ausreichen, die suspendierten Monomertröpfchen in Schwebe zu halten und die Abführung der Polymerisationswärme zu unterstützen. Für diese Aufgabe können verschiedene Rührertypen eingesetzt werden. Besonders geeignet sind Gitterrührer mit axialer Wirkung.

Das Volumenverhältnis von verkapselten Monomertröpfchen zu wässriger Phase beträgt 1 : 0,75 bis 1 : 20, vorzugsweise 1 : 1 bis 1 : 6.

Die Polymerisationstemperatur richtet sich nach der Zerfallstemperatur des eingesetzten Initiators. Sie liegt im Allgemeinen zwischen 50 bis 180°C, vorzugsweise zwischen 55 und 130°C. Die Polymerisation dauert im Allgemeinen 0,5 bis einige Stunden. Es hat sich bewährt, ein Temperaturprogramm anzuwenden, bei dem die Polymerisation bei niedriger Temperatur, beispielsweise 60°C begonnen wird und die Reaktionstemperatur mit fortschreitendem Polymerisationsumsatz gesteigert wird. Auf diese Weise lässt sich beispielsweise die Forderung nach sicherem Reaktionsverlauf und hohem Polymerisationsumsatz sehr gut erfüllen. Nach der Polymerisation wird das Polymerisat mit üblichen Methoden, beispielsweise durch Filtrieren oder Dekantieren, isoliert und gegebenenfalls gewaschen.

In einem weiteren Schritt wird das monodisperse, vinylaromatische Perlpolymerisat mit mindestens einer Verbindungen der Formel (I), mindestens einem kondensierten Formaldehyd in Gegenwart mindestens eines organischen Lösungsmittels und in Gegenwart mindestens einer Protonensäure zum monodispersen, amidomethylierten vinylaromatischen Perlpolymerisat umgesetzt.

Das monodisperse, vinylaromatische Perlpolymerisat kann beispielsweise zunächst aufgequollen werden und in diesem Zustand mit einer Mischung aus den Verbindungen der Formel (I), den kondensiertem Formaldehyd und den Protonensäuren vermischt werden. Genauso könnte aber zunächst die Verbindungen der Formel (I) zu dem monodispersen, vernetzten Perlpolymerisate in Gegenwart der organischen Lösungsmittel hinzugegeben werden und danach das kondensierte Formaldehyd und dann die Protonensäuren hinzugefügt werden. Bevorzugt wird zunächst das monodisperse, vernetzte Perlpolymerisat in Gegenwart des organischen Lösungsmittels aufgequollen und dann die Verbindungen der Formel (I) oder das kondensierte Formaldehyd hinzugegeben und dann die Protonensäure hinzugefügt. Die Abtrennung der organischen Lösungsmittel erfolgt vorzugsweise destillativ. Die Aufarbeitung der Reaktionsprodukte erfolgt nach dem Fachmann bekannten Verfahren. Bevorzugt wird die Reaktionsmischung erwärmt. Die Reaktion verläuft in einer Eintopfreaktion.

Im Allgemeinen beträgt das Stoffmengenverhältnis der organischen Lösungsmittel zu den Verbindungen der Formel (I) 4,5:1 bis 10:1. Bevorzugt beträgt das Stoffmengenverhältnis der organischen Lösungsmittel zu den Verbindungen der Formel (I) 5:1 bis 9:1. Besonders bevorzugt beträgt das Stoffmengenverhältnis der organischen Lösungsmittel zu den Verbindungen der Formel (I) 5,5:1 bis 8,5:1. Ganz besonders bevorzugt beträgt das Stoffmengenverhältnis der organischen Lösungsmittel zu den Verbindungen der Formel (I) 5,5:1 bis 7,5:1.

Das Stoffmengenverhältnis der aromatischen Gruppen im monodispersen, vinylaromatischen Perlpolymerisat zu den Verbindungen der Formel (I) beträgt beispielsweise 0,2:1 bis 2,5:1. Bevorzugt beträgt das Stoffmengenverhältnis der aromatischen Gruppen im monodispersen, vinylaromatischen Perlpolymerisat zu den Verbindungen der Formel (I) 0,5:1 bis 1,8:1.

Das Stoffmengenverhältnis von Verbindungen der Formel (I) zu kondensiertem Formaldehyd beträgt beispielsweise 0,7:1 bis 1,3:1. Bevorzugt beträgt das Stoffmengenverhältnis von Verbindungen der Formel (I) zu kondensiertem Formaldehyd 0,95:1 bis 1,1:1.

Das Stoffmengenverhältnis der Verbindungen der Formel (I) zu der eingesetzten Protonensäure beträgt 1:1 bis 1:3. Bevorzugt beträgt das Stoffmengenverhältnis der Verbindungen der Formel (I) zu der eingesetzten Protonensäure 1:1,7 bis 1:2,5.

Die Reaktionstemperatur für die Umsetzung der monodispersen, vinylaromatischen Perlpolymerisate zu den monodispersen, vinylaromatischen amidomethylierten Perlpolymerisaten liegt zwischen 55 °C und 75 °C. Ganz besonders bevorzugt beträgt die Reaktionstemperatur für die Umsetzung der monodispersen, vinylaromatischen Perlpolymerisate zu den monodispersen, vinylaromatischen amidomethylierten Perlpolymerisaten 62 °C bis 68 °C.

Normalerweise wird die Reaktion drucklos durchgeführt.

Eine besonders hohe Ausbeute an amidomethylierten Perlpolymerisaten lässt sich insbesondere bei der Umsetzung von monodispersen, vinylaromatischen Perlpolymerisaten mit Paraformaldehyd in Gegenwart von 1,2-Dichlorethan bei einer Reaktionstemperatur von 55 °C bis 75 °C und einem Stoffmengenverhältnis der Verbindungen der Formel (I) zu 1,2-Dichlorethan von 5,5:1 bis 8,5:1 erzielen. Insbesondere lässt sich eine besonders hohe Ausbeute an amidomethylierten Perlpolymerisaten erzielen, wenn als Verbindung der Formel (I) Phthalimid eingesetzt wird.

Die monodispersen, amidomethylierten, vinylaromatischen Perlpolymerisate sind insbesondere bedeutsame Zwischenprodukte für die Herstellung von Ionenaustauschern und Chelatharzen. So lassen sich beispielsweise, aus den, nach dem erfindungsgemäßen Verfahren hergestellten monodispersen, amidomethylierten, vinylaromatischen Perlpolymerisate, Ionenaustauscher, insbesondere Anionenaustauscher, und Chelatharze, herstellen.

Das monodisperse, vinylaromatische, amidomethylierte Perlpolymerisat kann dann in einem weiteren Schritt zu monodispersen, vinylaromatischen, aminomethylierten Perlpolymerisaten umgesetzt werden. Bevorzugt wird das monodisperse, vinylaromatische, amidomethylierte Perlpolymerisat weiter zu monodispersen, vinylaromatischen, aminomethylierten Perlpolymerisaten umgesetzt. Im Allgemeinen erfolgt die Umsetzung durch Behandeln des amidomethylierten, monodispersen, vinylaromatischen Perlpolymerisates mit wässrigen oder alkoholischen Lösungen eines Alkalihydroxids, wie Natriumhydroxid oder Kaliumhydroxid bei Temperaturen zwischen 100°C und 250°C, vorzugsweise bei Temperaturen zwischen 120 °C und 190°C. Bevorzugt erfolgt die Umsetzung mit Alkali- oder Erdalkalihydroxiden oder Gemischen dieser Verbindungen, besonders bevorzugt mit Alkalihydroxiden, wie insbesondere Natriumhydroxid. Bevorzugt verläuft die Umsetzung in Gegenwart einer wässrigen oder alkoholischen Lösung eines Alkalihydroxides. Die Konzentration der Natronlauge liegt im Bereich von 10 bis 50 Gew.-%, vorzugsweise 20 bis 40 Gew.-%. Dieses Verfahren ermöglicht die Herstellung monodisperser, vinylaromatischer, aminomethylierter Perlpolymerisate mit einer Substitution der aromatischen Kerne größer 1.

Das dabei entstehende monodisperse, vinylaromatische aminomethylierte Perlpolymerisat kann mit vollentsalztem Wasser alkalifrei gewaschen werden.

Das monodisperse, vinylaromatische, aminomethylierte Perlpolymerisat kann als Ionenaustauscher verwendet werden. Falls das monodisperse, vinylaromatische, aminomethylierte Perlpolymerisat als Ionenaustauscher verwendet wird, eignet es sich insbesondere für die Entfernung von Schwermetallen oder Edelmetallen aus wässrigen Lösungen von Erdalkali- oder Alkalien oder deren Dämpfen aus Solen der Alkalichloridelektrolyse aus wässrigen Salzsäuren, aus Abwässern oder Rauchgaswäschen, Grundwässern oder Deponieabwässern, aus flüssigen oder gasförmigen Kohlenwasserstoffen, Erdgasen, Erdgaskondensaten, Erdölen sowie aus flüssigen oder gasförmigen Halogenkohlenwasserstoffen.

Zudem kann das monodisperse, vinylaromatische, aminomethylierte Perlpolymerisat aber ebenfalls mit weiteren Alkylierungsmittel zu Anionenaustauschern oder Chelatharzen umgesetzt werden.

Weiterhin ist möglich, die erfindungsgemäßen monodisperse, vinylaromatische, aminomethylierte Perlpolymerisate mit Halomethylstickstoffheterocyclen, wie z.B. 2-Chlormethylpyridin, 3-Chlormethylpyridin oder 4-Chlormethylpyridin umzusetzen und dadurch Chelatharze herzustellen.

Gegenstand der vorliegenden Erfindung ist daher zudem ein Verfahren zur Herstellung monodisperse Anionenaustauscher und Chelatharze, bei dem

a) Monomertröpfchen aus mindestens einer monovinylaromatischen Verbindung und mindestens einer polyvinylaromatischen Verbindung sowie gegebenenfalls einem Porogen und einem Initiator oder einer Initiatorkombination, zu einem monodispersen, vinylaromatischen Perlpolymerisat umgesetzt werden,

b) dieses monodisperse, vinylaromatische Perlpolymerisat durch ein organisches Lösungsmittel aufgequollen wird und in diesem Zustand mit in situ hergestellten Carboniumionen, hergestellt durch die Reaktion von Verbindungen der Formel (I) und mindestens einem kondensiertem Formaldehyd in Gegenwart mindestens einer Protonensäure, bei einer Temperatur zwischen 55°C und 75°C in einem Eintopfverfahren, zu monodispersen, amidomethyliertem, vinylaromatischen Perlpolymerisat umgesetzt wird,

c) das monodispersen, amidomethylierte, vinylaromatischen Perlpolymerisat zu monodispersen, aminomethyliertem, vinylaromatischem Perlpolymerisat umgesetzt wird und

d) schließlich das monodisperse, amidomethylierte, vinylaromatische Perlpolymerisat mit Alkylierungsmittel zu Anionenaustauschern und Chelatharzen umgesetzt wird.

Bevorzugte Alkylierungsmittel im Sinne der vorliegenden Erfindung sind Alkylhalogenide, Halogenalkohole, Alkylsulfate, Dialkylsulfate, Alkyloxide, Leuckart-Wallach-Reagenzien oder Kombinationen dieser Alkylierungsmittel untereinander bzw. nacheinander.

Besonders bevorzugt werden Chlormethan, Ethylenoxid, Propylenoxid sowie die Leuckert-Wallach-Reagenzien oder deren Kombination eingesetzt. Beispielhaft werden Leuckart-Wallach-Reagenzien in Organikum, VEB Deutscher Verlag der Wissenschaften, Berlin 1968, 8. Auflage, Seite 479 beschrieben.

Als Suspensionsmedium werden Wasser oder Mineralsäuren eingesetzt. Gegebenenfalls können aber auch in Abhängigkeit des gewünschten Produktes Basen zugesetzt werden. Bevorzugt wird Wasser eingesetzt. Als Basen kommen gegebenenfalls Natronlauge, Kalilauge oder basische, jedoch nicht nucleophile Amine in Frage.

Der Verfahrensschritt d) wird durchgeführt bei Temperaturen von 20 bis 150°C, bevorzugt von 40 bis 110°C.. Verfahrensschritt d) wird bei Drücken von Normaldruck bis 6 bar, bevorzugt bei Normaldruck bis 4 bar durchgeführt.

Monodisperse Anionenaustauscher und Chelatharze mit den funktionellen Gruppen, die sich während des Verfahrensschritts d) ausbilden sind:

$$-[(CH_2)_n-NR_3-R_4] \qquad \text{(III)}$$

$$-\left[(CH_2)_n-\overset{\oplus}{N}R_3R_4R_5\right]X^{\ominus} \qquad \text{(IV)}$$

worin

- $R_3$ für Wasserstoff, eine Alkylgruppe, eine Hydroxyalkylgruppe oder eine Alkoxyalkylgruppe steht,
- $R_4$ für Wasserstoff, eine Alkylgruppe, eine Alkoxyalkylgruppe oder eine Hydroxyalkylgruppe steht,
- $R_5$ für Wasserstoff, eine Alkylgruppe, eine Alkoxyalkylgruppe oder eine Hydroxyalkylgruppe steht,
- m für eine Zahl 1 bis 5, besonders bevorzugt 1 steht und
- X für ein anionisches Gegenion, bevorzugt für $Cl^-$, $Br^-$, $OH^-$, $NO3^-$ oder $SO_4^{2-}$ steht.

In den Resten $R_3$, $R_4$ und $R_5$ steht Alkoxy bzw. Alkyl jeweils bevorzugt für 1 bis 6 Kohlenstoffatome.

In den monodispersen Anionenaustauschern und Chelatharzen trägt jeder aromatische Kern bevorzugt 0,1 bis 2 der obengenannten funktionellen Gruppen (III), (IV).

Die Anionenaustauscher werden eingesetzt

- zur Entfernung von Anionen aus wässrigen oder organischen Lösungen
- zur Entfernung von Anionen aus Kondensaten
- zur Entfernung von Farbpartikeln aus wässrigen oder organischen Lösungen,
- zur Entfernung von organischen Komponenten aus wässrigen Lösungen, beispielsweise von Huminsäuren aus Oberflächenwasser.

Weiterhin können die Anionenaustauscher eingesetzt werden zur Reinigung und Aufarbeitung von Wässern in der chemischen Industrie und Elektronikindustrie, insbesondere zur Herstellung von Reinstwasser.

Weiterhin können die erfindungsgemäßen Anionenaustauscher in Kombination mit gelförmigen und/oder makroporösen Kationenaustauschern zur Vollentsalzung wässriger Lösungen und/oder Kondensaten eingesetzt werden.

Mir der vorliegenden Erfindung wird ein neues Herstellungsverfahren für monodisperse, amidomethylierte, vinylaromatische Perlpolymerisate zur Verfügung gestellt, mit der diese insbesondere phthalamidomethylierte Perlpolymerisate, und monodisperse, aminomethylierte, Perlpolymerisate, effizient, unter Berücksichtigung ökologischer Gesichtspunkte und in hoher Ausbeute hergestellt werden können.

## Beispiel 1

Herstellung des monodispersen, makroporösen Perlpolymerisates auf der Basis von Styrol, Divinylbenzol und Ethylstyrol

In einem 10 l Glasreaktor werden 3000 g vollentsalztes Wasser vorgelegt und eine Lösung aus 10 g Gelatine, 16 g di-Natriumhydrogenphosphatdodekahydrat und 0,73 g Resorcin in 320 g entionisiertem Wasser hinzugefüllt und durchmischt. Die Mischung wird auf 25°C temperiert. Unter Rühren wird anschließend eine Mischung aus 3200 g von mikroverkapselten Monomertröpfchen mit enger Teilchengrößenverteilung aus 5 Gew.-% Divinylbenzol und 1 Gew.-% Ethylstyrol (eingesetzt als handelsübliches Isomerengemisch aus Divinylbenzol und Ethylstyrol mit 80 % Divinylbenzol), 0,4 Gew.-% Dibenzoylperoxid, 56,3 Gew.-% Styrol und 37,5 Gew.-% Isododekan (technisches Isomerengemisch mit hohem Anteil an Pentamethylheptan) gegeben, wobei die Mikrokapsel aus einem mit Formaldehyd gehärteten Komplexkoazervat aus Gelatine und einem Copolymer aus Acrylamid und Acrylsäure besteht, und 3200 g wässriger Phase mit einem pH-Wert von 12 zugesetzt. Die mittlere Teilchengröße der Monomertöpfchen beträgt 460 $\mu$m.

Der Ansatz wird unter Rühren durch Temperaturerhöhung nach einem Temperaturprogramm bei 25°C beginnend und bei 95°C endend auspolymerisiert. Der Ansatz wird abgekühlt, über ein 32 $\mu$m-Sieb gewaschen und anschließend im Vakuum bei 80°C getrocknet. Man erhält 1893 g eines kugelförmigen Polymerisates mit einer mittleren Teilchengröße von 440 $\mu$m, enger Teilchengrößenverteilung und glatter Oberfläche.

Das Polymerisat ist in der Aufsicht kreidig weiß und weist eine Schüttdichte von ca. 470 g/l auf.

### 1.1. Herstellung eines monodispersen, makroporösen Anionenaustauschers mit tertiären Aminogruppen - $CH_2N(CH_3)_2$ - Umsetzung bei 45 °C

Als Zwischenstufe hierbei wird ein monodisperser, makroporösen Anionenaustauscher mit Aminomethylgruppen - $CH_2NH_2$ - hergestellt.

### 1.2. Herstellung eines phthalimidomethylierten monodispersen, makroporösen Perlpolymerisates

Apparatur: 4 Liter Vierhalskolben, Dosiertrichter,Thermometer, Heizbad, Rührer

Bei Raumtemperatur werden 1503 ml 1,2 Dichlorethan vorgelegt. Dazu werden 252,5 g monodisperses, makroporöses Perlpolymerisat aus Beispiel 1 dosiert. Die Suspension wird 2 Stunden bei Raumtemperatur gerührt. Dann werden 117,3 g Paraformaldehyd - 91 gew.-% ig - und 507, 8 g Phthalimid dosiert. Die Suspension wird auf 45°C erwärmt. Bei dieser Temperatur wird 0,5 Stunden lang gerührt. Innerhalb von 2 Stunden werden dann bei 45°C 677 g Schwefelsäuremonohydrat dosiert. Anschließend rührt die Suspension dann 3 Stunden bei dieser Temperatur. Die warme Reaktionsbrühe wird abgesaugt. Es werden 2 Liter voll entsalztes Wasser dosiert. Destillativ werden Restmengen an 1,2 Dichlorethan entfernt. Der Ansatz wird danach abgekühlt und das Harzvolumen bestimmt.
Volumenausbeute : 1350 ml
Trockengewicht: 0,454 g pro ml Harz

### 1.3. Herstellung eines Aminomethylgruppen haltigen monodispersen, makroporösen Perlpolymerisates

Apparatur: 4 Liter Autoklav, Rührer, Temperaturmessung

Bei Raumtemperatur werden 826 ml voll entsalztes Wasser vorgelegt. Dazu wird eine Mischung von 371 ml voll entsalztem Wasser und 567 50 gew.-%iger Natronlauge dosiert. Unter Rühren werden 1330 ml Harz hergestellt nach Beispiel 1.1. dosiert.

Die Suspension wird auf 180 °C erhitzt und weitere 8 Stunden bei dieser Temperatur gerührt. Danach wird die Suspension abgekühlt. Das erhaltene Perlpolymerisat wird über ein Sieb abgetrennt und mit voll entsalztem Wasser neutral gewaschen.
Volumenausbeute : 950 ml
Hochgerechnet auf die Gesamtausbeute an ZI Stufe : 964 ml
Gesamte gebildete Basenmenge - Produkt aus HCl - Zahl und Gesamtausbeute Harz: 1822 mmol
HCl - Zahl : 1,89 mol/l
Lieferform : 30 ml
Chloridform : 44 ml
Zweite Basenform : 35 ml - diese 35 ml wiegen : 9,609 g
Erstsubstitution : 0,81

**1.4. Herstellung eines Dimethylaminogruppen haltigen monodispersen, makroporösen Perlpolymerisates**

**Apparatur :** 4 Liter Vierhalskolben, Kühler, Rührer, Thermometer, Dulcometer

Bei Raumtemperatur werden 1380 ml voll entsalztes Wasser 289,8 g 36 gew.-%ige wässrige Formalinlösung und 920 ml Harz aus Beispiel 1.2. vorgelegt. Die Suspension wird auf 40°C erhitzt Durch Dosierung von 85 gew.-%iger wässriger Ameisensäure wird der pH Wert auf pH 3 eingestellt. Anschließend wird folgendes Reaktionsprogramm verfolgt:

es wird auf 55°C erhitzt und weitere 0,5 Stunden bei 55°C gerührt

dann es wird auf 70°C erhitzt und weitere 0,5 Stunden bei 70°C gerührt

es wird auf 80°C erhitzt und weitere 0,5 Stunden bei 80°C gerührt

dann wird auf Rückflusstemperatur - ca. 97 °C - erhitzt. Während der gesamten Aufheizphase wird der pH Wert durch Dosierung von 85 gew.-%iger Ameisensäure bei pH 3 gehalten . Nach Erreichen der Rückflusstemperatur wird der pH Wert innerhalb von 0,5 Stunden auf pH 2 eingestellt .Zunächst mit der restlichen Ameisensäure, dann mit 96 gew.-%iger Schwefelsäure . Es wird 0,5 Stunden bei pH 2 nachgerührt. Dann wird der pH Wert auf 1 eingestellt .Anschließend wird in ca. 0,5 Stunden weitere Schwefelsäure nach Vorgabe dosiert und dann weitere 10 Stunden bei Rückfluss gerührt. Danach wird die Suspension abgekühlt, das Harz über ein Sieb abgetrennt und mit voll entsalztem Wasser ausgewaschen.

Insgesamt werden 207 g 85 gew.-%ige Ameisensäure und 266,3 g 96 gew.-%ige Schwefelsäure dosiert.
Volumenausbeute : 1400 ml

Die gesamte Harzmenge wird in eine Säule gefüllt und von oben mit 3 Bettvolumen 4 gew.-%iger wässriger Natronlauge behandelt. Anschließend wird der Überschuss an Natronlauge mit 5 Bettvolumen mit voll entsalztem Wasser ausgewaschen.
Volumenausbeute : 1050 ml
Hochgerechnete Gesamtausbeute an Harz : 1100 ml
Gesamte gebildete Basenmenge - Produkt aus HCl - Zahl und Gesamtausbeute Harz : 1584 mmol
HCl - Zahl : 1,44 mol/l
Lieferform : 50 ml
Chloridform : 66 ml
Zweite Basenform : 50 ml
Harzstabilität : 99 % ganze Perlen

__Beispiel 2__

Herstellung eines monodispersen, makroporösen Anionenaustauschers mit tertiären Aminogruppen - $CH_2N(CH_3)_2$ - **Umsetzung bei 65 °C**

Als Zwischenstufe hierbei wird ein monodisperser, makroporösen Anionenaustauscher mit Aminomethylgruppen - $CH_2NH_2$ - hergestellt.

**2.1. Herstellung eines phthalimidomethylierten monodispersen, makroporösen Perlpolymerisates**

Apparatur: 4 Liter Vierhalskolben, Dosiertrichter,Thermometer, Heizbad, Rührer

Bei Raumtemperatur werden 1503 ml 1,2 Dichlorethan vorgelegt. Dazu werden 252,5 g monodisperses, makroporöses Perlpolymerisat aus Beispiel 1 dosiert. Die Suspension wird 2 Stunden bei Raumtemperatur gerührt. Dann werden 117,3 g Paraformaldehyd - 91 gew.-%ig - und 507, 8 g Phthalimid dosiert. Die Suspension wird auf 65°C erwärmt. Bei dieser Temperatur wird 0,5 Stunden lang gerührt. Innerhalb von 2 Stunden werden dann bei 65°C 677 g Schwefelsäuremonohydrat dosiert. Anschließend rührt die Suspension dann 3 Stunden bei dieser Temperatur .Die warme Reaktionsbrühe wird abgesaugt. Es werden 2 Liter voll entsalztes Wasser dosiert. Destillativ werden Restmengen an 1,2 Dichlorethan entfernt. Der Ansatz wird danach abgekühlt und das Harzvolumen bestimmt.
Volumenausbeute : 1475 ml
Trockengewicht: 0,45 g pro ml Harz

**2.2. Herstellung eines Aminomethylgruppen haltigen monodispersen, makroporösen Perlpolymerisates**

Apparatur: 4 Liter Autoklav, Rührer, Temperaturmessung

Bei Raumtemperatur werden 855 ml voll entsalztes Wasser vorgelegt. Dazu wird eine Mischung von 424 ml voll entsalztem Wasser und 649 g 50 gew.-%iger Natronlauge dosiert. Unter Rühren werden 1455 ml Harz hergestellt nach Beispiel 2.1. dosiert.

Die Suspension wird auf 180 °C erhitzt und weitere 8 Stunden bei dieser Temperatur gerührt. Danach wird die Suspension abgekühlt. Das erhaltene Perlpolymerisat wird über ein Sieb abgetrennt und mit voll entsalztem Wasser neutral gewaschen .
Volumenausbeute : 1050 ml
Hochgerechnet auf die Gesamtausbeute an ZI Stufe : 1064 ml
Gesamte gebildete Basenmenge - Produkt aus HCl - Zahl und Gesamtausbeute Harz : 2288 mmol
HCl - Zahl : 2,15 mol/l
Lieferform : 30 ml
Chloridform : 43 ml
Zweite Basenform : 34 ml - diese 34 ml wiegen : 9,016 g
Erstsubstitution : 0,98

**2.3. Herstellung eines Dimethylaminogruppen haltigen monodispersen, makroporösen Perlpolymerisates**

**Apparatur :** 4 Liter Vierhalskolben, Kühler, Rührer, Thermometer, Dulcometer

Bei Raumtemperatur werden 1530 ml voll entsalztes Wasser 365,5 g 36 gew.-%ige wässrige Formalinlösung und 1020 ml Harz aus Beispiel 2.2. vorgelegt. Die Suspension wird auf 40°C erhitzt Durch Dosierung von 85 gew.-%iger wässriger Ameisensäure wird der pH Wert auf pH 3 eingestellt. Anschließend wird folgendes Reaktionsprogramm verfolgt:

es wird auf 55°C erhitzt und weitere 0,5 Stunden bei 55°C gerührt

dann es wird auf 70°C erhitzt und weitere 0,5 Stunden bei 70°C gerührt

es wird auf 80°C erhitzt und weitere 0,5 Stunden bei 80°C gerührt

dann wird auf Rückflusstemperatur - ca. 97 °C - erhitzt. Während der gesamten Aufheizphase wird der pH Wert durch Dosierung von 85 gew.-%iger Ameisensäure bei pH 3 gehalten . Nach Erreichen der Rückflusstemperatur wird der pH Wert innerhalb von 0,5 Stunden auf pH 2 eingestellt .Zunächst mit der restlichen Ameisensäure, dann mit 96 gew.-%iger Schwefelsäure . Es wird 0,5 Stunden bei pH 2 nachgerührt. Dann wird der pH Wert auf 1 eingestellt .Anschließend wird in ca. 0,5 Stunden weitere Schwefelsäure nach Vorgabe dosiert und dann weitere 10 Stunden bei Rückfluss gerührt. Danach wird die Suspension abgekühlt, das Harz über ein Sieb abgetrennt und mit voll entsalztem Wasser ausgewaschen.

Insgesamt werden 261,1 g 85 gew.-%ige Ameisensäure und 335,8 g 96 gew.-%ige Schwefelsäure dosiert.
Volumenausbeute : 1525 ml

Die gesamte Harzmenge wird in eine Säule gefüllt und von oben mit 3 Bettvolumen 4 gew.-%iger wässriger Natronlauge behandelt. Anschließend wird der Überschuss an Natronlauge 5 Bettvolumen mit voll entsalztem Wasser ausgewaschen.
Volumenausbeute : 1180 ml
Hochgerechnete Gesamtausbeute an Harz : 1231 ml
Gesamte gebildete Basenmenge - Produkt aus HCl - Zahl und Gesamtausbeute Harz : 2066 mmol
HCl - Zahl : 1,678 mol/l
Lieferform : 50 ml
Chloridform : 65 ml
Zweite Basenform : 50 ml
Harzstabilität : 99 % ganze Perlen

In Tabelle 3 wird ein Vergleich der Kenndaten der in den Beispielen 1 und 2 erhaltenen Harze gegeben.

**Tabelle 3**

| Beispiel / Reaktionstemperatur in °C | Ausbeute an phthalimidomethyliertem Perlpolymerisat in ml | Ausbeute an aminomethyliertem Perlpolymerisat in ml | Gesamte Basenmenge auf der Stufe des aminomethyliertem Perlpolymerisates in mmol | Erstsubstitution | Ausbeute an Dimethylaminomethyliertem Perlpolymerisat in ml | Gesamte Basenmenge auf der Stufe des Dimethylaminomethyliertem Perlpolymerisates in mmol | HCl - Zahl des Dimethylaminomethylierten Perlpolymerisates in mol/ Liter Harz |
|---|---|---|---|---|---|---|---|
| 1 / 45 °C | 1350 | 964 | 1822 | 0,81 | 1100 | 1584 | 1,44 |
| 2 / 65°C | 1475 | 1064 | 2288 | 0,98 | 1231 | 2066 | 1,678 |

**Untersuchungsmethoden:**

### Anzahl perfekter Perlen nach Herstellung

100 Perlen werden unter dem Mikroskop betrachtet. Ermittelt wird die Anzahl der Perlen, die Risse tragen oder Absplitterungen zeigen. Die Anzahl perfekter Perlen ergibt sich aus der Differenz der Anzahl beschädigter Perlen zu 100.

### Volumenspiel Chlorid / OH - Form

100 ml basische Gruppen tragender Anionenaustauscher werden mit vollentsalztem Wasser in eine Glassäule gespült. Es werden in 1 Stunde und 40 Minuten 1000 ml 3 gew.-%ige Salzsäure überfiltriert. Anschließend wird das Harz mit vollentsalztem Wasser chloridfrei gewaschen. Das Harz wird in ein Stampfvolumeter unter vollentsalztem Wasser gespült und bis zur Volumenkonstanz eingerüttelt - Volumen V 1 des Harzes in der Chloridform.

Das Harz wird wiederum in die Säule überführt. Es werden 1000 ml 2 gew.-%ige Natronlauge überfiltriert. Anschließend wird das Harz mit vollentsalztem Wasser bis auf einen pH Wert von 8 im Eluat alkalifrei gewaschen. Das Harz wird in ein Stampfvolumeter unter vollentsalztem Wasser gespült und bis zur Volumenkonstanz eingerüttelt - Volumen V2 des Harzes in der freien Basenform - (OH - Form).

Berechnung :

$$V1 - V2 = V3$$

V3 : V1/100 = Quellungsspiel Chlorid / OH - Form in %

### Bestimmung der Menge an basischen Aminomethylgruppen im aminomethylierten, vernetzten Polystyrol Perlpolymerisat - HCl - Zahl

100 ml des aminomethylierten Perlpolymerisates werden auf dem Stampfvolumeter eingerüttelt und anschließend mit vollentsalztem Wasser in eine Glassäule gespült. In 1 Stunde und 40 Minuten werden 1000 ml 2 gew.%ige Natronlauge überfiltriert. Anschließend wird vollentsalztes Wasser überfiltriert bis 100 ml Eluat mit Phenolphthalein versetzt einen Verbrauch an 0,1 n (0,1 normaler) Salzsäure von höchstens 0,05 ml haben.

50 ml dieses Harzes werden in einem Becherglas mit 50 ml vollentsalztem Wasser und 100 ml 1n Salzsäure versetzt. Die Suspension wird 30 Minuten gerührt und anschließend in eine Glassäule gefüllt. Die Flüssigkeit wird abgelassen. Es werden weitere 100 ml 1n Salzsäure über das Harz in 20 Minuten filtriert. Anschließend werden 200 ml Methanol überfiltriert. Alle Eluate werden gesammelt und vereinigt und mit 1n Natronlauge gegen Methylorange titriert.

Die Menge an Aminomethylgruppen in 1 Liter aminomethyliertem Harz errechnet sich nach folgender Formel: (200 - V)· 20 = mol Aminomethylgruppen pro Liter Harz.

### Bestimmung des Substitutionsgrades der aromatischen Kerne des vernetzten Perlpolymerisates durch Aminomethylgruppen

Die Menge Aminomethylgruppen in der Gesamtmenge des aminomethylierten Harzes wird nach obiger Methode bestimmt.

Aus der Menge an eingesetztem Perlpolymerisat - A in Gramm - wird durch Division mit dem Molekulargewicht die in dieser Menge vorliegende Molmenge an Aromaten errechnet.

Beispielsweise werden aus 300 g Perlpolymerisat 950 ml aminomethyliertes Perlpolymerisat hergestellt mit einer Menge von 1,8 mol/l Aminomethylgruppen.

950 ml aminomethyliertes Perlpolymerisat enthalten 2,82 mol Aromaten.

Pro Aromat liegen dann 1,8 / 2,81 = 0,64 mol Aminomethylgruppen vor.

Der Substitutionsgrad der aromatischen Kerne des vernetzten Perlpolymerisates durch Aminomethylgruppen beträgt 0,64.

## Patentansprüche

1. Verfahren zur Herstellung von monodispersen, amidomethylierten, vinylaromatischen Perlpolymerisaten, **dadurch gekennzeichnet, dass** mindestens ein monodisperses, vinylaromatisches Perlpolymerisat mit mindestens einer

Verbindung der Formel (I) oder deren Salze

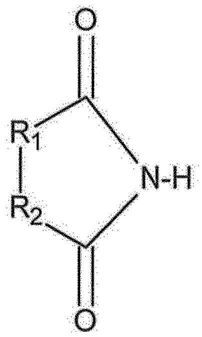

(I)

wobei $R_1$ = -CH-($C_1$-$C_6$-Alkyl) oder -$CH_2$- und $R_2$ = -CH-($C_1$-$C_6$-Alkyl) oder -$CH_2$- oder $R_1$ und $R_2$ bilden zusammen einen gegebenenfalls durch $C_1$-$C_6$-Alkyl substituierten $C_6$-$C_{14}$-Aryl oder $R_1$ und $R_2$ stehen jeweils für -CH= und
mindestens einem kondensierten Formaldehyd
in Gegenwart mindestens einer Protonensäure und
in Gegenwart mindestens eines organischen Lösungsmittels, bei einer Temperatur zwischen 55 °C und 75°C in einem Eintopfverfahren, umgesetzt wird.

2. Verfahren gemäß Anspruch 1, **dadurch gekennzeichnet, dass** die Reaktion bei 62 bis 68°C durchgeführt wird.

3. Verfahren gemäß einem der Ansprüche 1 oder 2, **dadurch gekennzeichnet, dass** als Protonensäuren Schwefelsäure, Salzsäure, Oleum oder Gemische dieser Säuren eingesetzt werden.

4. Verfahren gemäß einem oder mehreren der Ansprüche 1 bis 3, **dadurch gekennzeichnet, dass** als organisches Lösungsmittel chlorierte aliphatische Kohlenwasserstoffe, insbesondere chlorierte $C_1$-$C_6$-Alkane, eingesetzt werden.

5. Verfahren gemäß Anspruch 4, **dadurch gekennzeichnet, dass** das Verhältnis von Lösungsmittel zu Verbindungen der Formel (I) zwischen 5,5:1 bis 8,5:1 beträgt.

6. Verfahren gemäß einem oder mehreren der Ansprüche 1 bis 5, **dadurch gekennzeichnet, dass** als kondensierte Formaldehyde Paraformaldehyd oder Trioxan oder Gemische aus diesen Verbindungen eingesetzt werden.

## Claims

1. Method of producing monodisperse amidomethylated vinylaromatic bead polymers that comprises reacting at least one monodisperse vinylaromatic bead polymer with at least one compound of formula (I) or salts thereof

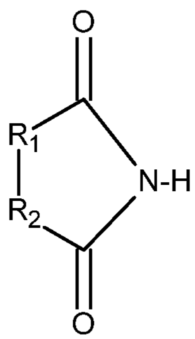

(I)

where $R_1$ = -CH-($C_1$-$C_6$-alkyl) or -$CH_2$- and $R_2$ = -CH-($C_1$-$C_6$-alkyl) or -$CH_2$- or $R_1$ and $R_2$ combine to form an optionally $C_1$-$C_6$-alkyl-substitued $C_6$-$C_{14}$-aryl or $R_1$ and $R_2$ each represent -CH= and
at least one condensed formaldehyde

in the presence of at least one protic acid and
in the presence of at least one organic solvent at a temperature between 55°C and 75°C in a one-pot process.

2. The method as claimed in claim 1, **characterized in that** the reaction is carried out at 62 to 68°C.

3. The method as claimed in either of claims 1 and 2, **characterized in that** sulfuric acid, hydrochloric acid, oleum or mixtures thereof are employed as protic acids.

4. The method as claimed in one or more of claims 1 to 3, **characterized in that** chlorinated aliphatic hydrocarbons, in particular chlorinated $C_1$-$C_6$-alkanes, are employed as organic solvent.

5. The method as claimed in claim 4, **characterized in that** the ratio of solvent to compound of formula (I) is between 5.5:1 to 8.5:1.

6. The method as claimed in one or more of claims 1 to 5, **characterized in that** paraformaldehyde or trioxane or mixtures thereof are employed as condensed formaldehydes.

## Revendications

1. Procédé de fabrication de polymères en perles vinylaromatiques, amidométhylés, monodispersés, **caractérisé en ce qu'**au moins un polymère en perles vinylaromatique monodispersé est mis en réaction avec au moins un composé de formule (I) ou ses sels

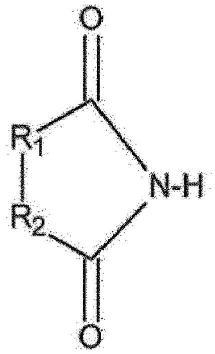

(I)

dans laquelle $R_1$ = -CH-(alkyle en $C_1$-$C_6$) ou $-CH_3$- et $R_2$ = -CH-(alkyle en $C_1$-$C_6$) ou $-CH_2$- ou $R_1$ et $R_2$ forment ensemble un aryle en $C_6$-$C_{14}$ éventuellement substitué par alkyle en $C_1$-$C_6$, ou $R_1$ et $R_2$ représentent chacun -CH=, et
au moins un formaldéhyde condensé,
en présence d'au moins un acide protique et
en présence d'au moins un solvant organique, à une température comprise entre 55 °C et 75 °C, dans un procédé monotope.

2. Procédé selon la revendication 1, **caractérisé en ce que** la réaction est réalisée à une température de 62 à 68 °C.

3. Procédé selon l'une quelconque des revendications 1 ou 2, **caractérisé en ce que** de l'acide sulfurique, de l'acide chlorhydrique, de l'oléum ou des mélanges de ces acides sont utilisés en tant qu'acides protiques.

4. Procédé selon une ou plusieurs des revendications 1 à 3, **caractérisé en ce que** des hydrocarbures aliphatiques chlorés, notamment des alcanes en $C_1$-$C_6$ chlorés, sont utilisés en tant que solvant organique.

5. Procédé selon la revendication 4, **caractérisé en ce que** le rapport entre les solvants et les composés de formule (I) est compris entre 5,5:1 et 8,5:1.

6. Procédé selon une ou plusieurs des revendications 1 à 5, **caractérisé en ce que** du paraformaldéhyde ou du trioxane ou des mélanges de ces composés sont utilisés en tant que formaldéhydes condensés.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6649663 B1
- US 7053129 B1
- WO 2008229882 A
- US 4232125 A
- US 4444961 A
- EP 0046535 A
- US 4419245 A
- WO 9312167 A


### In der Beschreibung aufgeführte Nicht-Patentliteratur


- **LEUCKART-WALLACH-REAGENZIEN.** Organikum. VEB Deutscher Verlag der Wissenschaften, 1968, 479